# EUROPÄISCHE PATENTSCHRIFT

(11) **EP 2 820 059 B1**
(45) Veröffentlichungstag und Bekanntmachung des Hinweises auf die Patenterteilung: **26.12.2018**
(21) Anmeldenummer: 13706561.1
(22) Anmeldetag: 28.02.2013
(51) Int. Cl.: C08G 18/40, C08G 18/42, C08G 18/48

(54) **POLYURETHAN-HARTSCHAUMSTOFFE**
POLYURETHANE SOLID FOAM MATERIALS
MOUSSE RIGIDE DE POLYURÉTHANE

(30) Priorität: 01.03.2012 EP 12157700
(43) Veröffentlichungstag der Anmeldung: 07.01.2015
(73) Patentinhaber: BASF SE, 67056 Ludwigshafen am Rhein (DE)
(72) Erfinder: JACOBMEIER, Olaf, 32312 Lübbecke (DE); KAMPF, Gunnar, 32369 Rahden (DE); KÖNIG, Christian, 68165 Mannheim (DE)
(74) Vertreter: BASF IP Association
(86) Internationale Anmeldenummer: PCT/EP2013/054099
(87) Internationale Veröffentlichungsnummer: WO 2013/127959

(56) Entgegenhaltungen:
- EP-A1- 1 923 417
- DE-A1- 19 630 281
- GB-A- 1 049 126

## Beschreibung

Die Erfindung betrifft Polyurethan-Hartschaumstoffe, ein Verfahren zu ihrer Herstellung sowie eine zu ihrer Herstellung geeignete Polyolkomponente enthaltend Polyetheresterpolyole.

Polyurethan-Hartschaumstoffe sind seit langem bekannt und vielfach beschrieben worden. Der Einsatz der Polyurethan-Hartschaumstoffe erfolgt vorwiegend zur Wärmeisolation, beispielsweise in Fernwärmerohren, Transportmitteln oder Gebäuden sowie zur Herstellung von Bauelementen, insbesondere Sandwich-Elementen.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von Polyurethan-Hartschaumstoffen und ihre Verwendung als Deck- oder Kernschicht in Verbundelementen sowie ihre Anwendung als Dämmschicht in der Kühl- oder Heizungstechnik findet sich z.B. in "Polyurethane", Kunststoff-Handbuch, Band 7, 3. Auflage 1993, herausgegeben von Dr. Günter Oertel, Carl-Hanser-Verlag, München/Wien.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden.

Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten- und der gewünschten Anwendungseigenschaften (z.B. EP-A 1 632 511, US-B 6,495,722, WO 2006/108833).
Die Oberflächeneigenschaften der bekannten Polyurethan-Hartschaumstoffe sind jedoch weiterhin, insbesondere bei der Herstellung von Verbundelementen, verbesserungsbedürftig, da hiervon auch die Haftung der Deckschichten am Schaum wesentlich beeinflusst wird. Auch bei der Herstellung von Schaumstoffen nach dem Sprühschaumverfahren ist eine gute Oberfläche von großer Bedeutung.
Die Druckschriften EP 0 728 783 A1, EP 0 826 708 A1 und WO 2010/106067 A1 beschreiben Verfahren zur Herstellung von PU-Hartschaumstoffen, in welchen die Polyolkomponente Rizinusöl enthält. Rizinusöl kann vorteilhaft für die Oberflächeneigenschaften des Schaums sein. Andererseits kann Rizinusöl in Gegenwart von Wasser, bedingt durch eine Phasentrennung, zu einer Instabilität der Polyolkomponente führen, was zu Problemen bei der Verarbeitung führen kann. Wasser wird häufig als kostengünstiges und umweltfreundliches Treibmittel in der Polyolkomponente verwendet. Ein Nachteil des in EP 0 826 708 A1 beschriebenen Verfahrens ist neben der hohen Viskosität der Polyolkomponente auch die sehr schlechte Haftung gebildeten PU-Hartschaumstoffe. Auch die durch das in EP 0 728 783 A1 beschriebene Verfahren hergestellten PU-Hartschaumstoffe sind bezüglich ihrer Oberflächeneigenschaften und Haftung noch verbesserungsbedürftig. Die nach der WO 2010/106067 A1 hergestellten PU-Hartschaumstoffe weisen eine gute Haftung und eine gute Oberflächenbeschaffenheit auf, sind jedoch bezüglich der Lagerstabilität der Polyolkomponente bei größeren Wassermengen (> 1,5-Gew.-Teilen) noch verbesserungsbedürftig. Das Dokument GB 1 049 126 A offenbart die Herstellung von PUR-Hartschaumstoffen (siehe Seite 1, Zeilen 12-15, Seite 6, Zeilen 13-21 und Anspruch 1). Im Beispiel 21 wird zuerst ein Polyetheresterol hergestellt: Einer Mischung aus 94 g Pentaerythrit, 31 g Glycerin und 133 g Ethylenoxid werden 70 g Ölsäure zugegeben. Bei einer Reaktionstemperatur von 225-250°C wird ein Polyetheresterol erzeugt. Es besteht daher die Aufgabe, eine Polyolkomponente zur Herstellung von Polyurethan-Hartschaumstoffen bereitzustellen, die eine hohe Löslichkeit für physikalische Treibmittel aufweist, auch bei Änderungen der Zusammensetzung phasenstabil ist und zudem eine niedrige Viskosität und gute Verarbeitungseigenschaften, insbesondere eine gute Aushärtung, besitzt.

Gelöst wird die Aufgabe durch Polyurethan-Hartschaumstoffe, erhältlich durch Umsetzung von
A) organischen oder modifizierten organischen Polyisocyanaten oder Gemischen daraus,
B) Verbindungen mit mindestens zwei mit Isocyanatgruppen reaktiven Wasserstoffatomen in Anwesenheit von
C) gegebenenfalls weiteren Polyesterpolyolen,
D) gegebenenfalls Polyetherolpolyolen,
E) gegebenenfalls Flammschutzmitteln,
F) einem oder mehreren Treibmitteln,
G) Katalysatoren, und
H) gegebenenfalls weiteren Hilfsmitteln und/oder Zusatzstoffen,
dadurch gekennzeichnet, dass Komponente B) das Umsetzungsprodukt von
a1) 15 bis 40 Gew.-% eines oder mehrerer Polyole oder Polyamine mit einer mittleren Funktionalität von 2,5 bis 8,
a2) 2 bis 30 Gew.-% einer oder mehrerer Fettsäuren und/oder Fettsäuremonoestern,
a3) 35 bis 70 Gew.-% eines oder mehrerer Alkylenoxide mit 2 bis 4 C-Atomen,
enthält.

Bevorzugt weisen die Polyole, Polyamine oder Gemische von Polyolen und/oder Polyaminen eine mittlere Funktionalität von 3 bis 6, besonders bevorzugt von 3,5 bis 5,5 auf.

Bevorzugte Polyole oder Polyamine der Komponente a1) sind ausgewählt aus der Gruppe bestehend aus Zuckern (Sorbit, Glucose, Sucrose), Pentaerythrit, Sorbit, Trimethylolpropan, Glycerin, Toluylendiamin, Ethylendiamin, Ethylenglykolen, Propylenglykol und Wasser. Besonders bevorzugt sind Zucker (Sorbit, Glucose, Sucrose), Glycerin, Wasser und Ethylenglykole sowie Gemische daraus, insbesondere bevorzugt sind Gemische enthaltend zwei oder mehr Verbindungen ausgewählt aus Saccharose, Glycerin, Wasser und Diethylenglykol.

In einer speziellen Ausführungsform enthält die Komponente a1) ein Gemisch aus Glycerin und Saccharose.

Der Anteil an Polyolen und/oder Poyaminen a1) an den erfindungsgemäßen Polyetheresterpolyolen beträgt im Allgemeinen 15 bis 40 Gew.-%, bevorzugt 20 bis 35 Gew.-%, besonders bevorzugt 25 bis 30 Gew.-%, bezogen auf das Gewicht der Polyetheresterpolyole.

Im Allgemeinen ist die Fettsäure oder der Fettsäuremonoester a2) ausgewählt aus der Gruppe bestehend aus Polyhydroxyfettsäuren, Ricinolsäure, Hydroxyl-modifizierten Ölen, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure. Bevorzugte Fettsäuremonoester sind die Methylester.

In einer bevorzugten Ausführungsform der Erfindung werden die Fettsäuren oder Fettsäuremonoester a2) in Form von Fettsäuremethylestern, Biodiesel oder reinen Fettsäuren eingesetzt. Besonders bevorzugt sind Biodiesel und reine Fettsäuren, speziell bevorzugt sind reine Fettsäuren, vorzugsweise Ölsäure und Stearinsäure, insbesondere Ölsäure.

In einer weiteren bevorzugten Ausführungsform der vorliegenden Erfindung ist die Fettsäure oder der Fettsäuremonoester a2) Ölsäure oder Stearinsäure oder ein Derivat dieser Fettsäuren, besonders bevorzugt sind Ölsäure, Ölsäuremethylester, Stearinsäure und Stearinsäuremethylester. Die Fettsäure oder der Fettsäuremonoester dient in der Regel dazu, die Treibmittellöslichkeit bei der Herstellung von Polyurethanschaumstoffen zu verbessern. In einer speziell bevorzugten Ausführungsform der Erfindung enthält die Komponente a2) Ölsäuremethylester, insbesondere besteht sie daraus.

Der Fettsäureanteil der erfindungsgemäßen Polyetheresterpolyole beträgt im Allgemeinen 2 bis 30 Gew.-%, bevorzugt 5 bis 25 Gew.-%, besonders bevorzugt 8 bis 20 Gew.-% und insbesondere 12 bis 17 Gew.-%, bezogen auf das Gewicht der Polyetheresterpolyole.

Geeignete Alkylenoxide a3) sind beispielsweise 1,3-Propylenoxid und vorzugsweise 1,2-Propylenoxid. Die Alkylenoxide können einzeln, alternierend nacheinander oder als Mischungen verwendet werden. Bevorzugt ist reines Propylenoxid.

In einer bevorzugten Ausführungsform wird als Alkoxylierungskatalysator ein Amin verwendet, bevorzugt Dimethylethanolamin oder Imdiazol, besonders bevorzugt ist Imidazol.

Der Anteil an Alkylenoxiden an den erfindungsgemäßen Polyetheresterpolyole beträgt im Allgemeinen 35 bis 70 Gew.-%, bevorzugt 50 bis 65 Gew.-%, besonders bevorzugt 55 bis 60 Gew.-%.

Die erfindungsgemäßen Polyetheresterpolyole weisen eine OH-Zahl von 200 bis 700 mg KOH/g, vorzugsweise von 300 bis 600 mg KOH/g, besonders bevorzugt von 350 bis 500 mg KOH/g und insbesondere von 400 bis 500 mg KOH/g auf.

Im Allgemeinen weisen die erfindungsgemäßen Polyetheresterpolyole eine mittlere Funktionalität von 2,5 bis 8, bevorzugt von 3 bis 6, besonders bevorzugt von 3,5 bis 5,5 und insbesondere von 4 bis 5 auf.

Die Viskosität der erfindungsgemäßen Polyetheresterpolyole beträgt im Allgemeinen < 10 000 mPas, bevorzugt < 7000 mPas, besonders bevorzugt < 5500 mPas und speziell < 4 000 mPas, jeweils gemessen bei 25 °C nach DIN 53018.

Weiterhin betrifft die Erfindung ein Verfahren zur Herstellung von Polyurethan-Hartschaumstoffen durch Umsetzung von
A) organischen oder modifizierten organischen Polyisocyanaten oder Gemischen daraus,
B) einem oder mehreren der oben beschriebenen Polyetheresterpolyole,
C) gegebenenfalls weiteren Polyesterpolyolen,
D) gegebenenfalls Polyetherolpolyolen, und
E) gegebenenfalls Flammschutzmitteln,
F) einem oder mehreren Treibmitteln,
G) Katalysatoren, sowie
H) gegebenenfalls weiteren Hilfsmitteln und/oder Zusatzstoffen.

Gegenstand der vorliegenden Erfindung ist auch eine Polyolmischung umfassend die Komponenten B) bis F) und H), also
B) eines oder mehrere der oben beschriebenen Polyetheresterpolyole,
C) gegebenenfalls weitere Polyesterpolyole,
D) gegebenenfalls Polyetherpolyole,
E) gegebenenfalls Flammschutzmittel,
F) ein oder mehrere Treibmittel,
G) gegebenenfalls Katalysatoren,
H) gegebenenfalls weitere Hilfsmittel und/oder Zusatzstoffe.

Weitere Gegenstände der vorliegenden Erfindung sind auch Polyurethan-Hartschaumstoffe und Polyisocyanurat-Hartschaumstoffe, erhältlich nach dem erfindungsgemäßen Verfahren, sowie die Verwendung der erfindungsgemäßen Polyetheresterpolyole zur Herstellung von Polyurethan-Hartschaumstoffen oder Polyisocyanurat-Hartschaumstoffen.

Im Allgemeinen ist der Anteil der erfindungsgemäßen Polyetheresterpolyole B) > 20 Gew.-%, bevorzugt > 40 Gew.-%, besonders bevorzugt > 60 Gew.-% und insbesondere bevorzugt > 70 Gew.-%, bezogen auf die Summe der Komponenten B) bis H).

Zur Herstellung der Polyurethan-Hartschaumstoffe nach dem erfindungsgemäßen Verfahren finden, neben den oben beschriebenen speziellen Polyetheresterpolyolen, die an sich bekannten Aufbaukomponenten Verwendung, zu denen im Einzelnen folgendes auszuführen ist.

Als organische oder modifizierte organische Polyisocyanate A) kommen die an sich bekannten aliphatischen, cycloaliphatischen, araliphatischen und vorzugsweise die aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d.h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffen wird ganz besonders bevorzugt Polymer-MDI eingesetzt.

Geeignete weitere Polyesterpolyole C) können beispielsweise aus organischen Dicarbonsäuren mit 2 bis 12 Kohlenstoffatomen, vorzugsweise aromatischen oder einem Gemisch aus aromatischen und aliphatischen Dicarbonsäuren, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Therephthalsäure und/oder Isophthalsäure im Gemisch oder alleine verwendet. Als alphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierte Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Der Gehalt der weiteren Polyesterpolyole C) beträgt im Allgemeinen 0 bis 20 Gew.-%, bezogen auf die Summe der Komponenten B) bis H). In einer Ausführungsform der Erfindung werden 1 bis 10 Gew.-% der Polyesterpolyole C) verwendet. In einer bevorzugten Ausführungsform der Erfindung werden keine weiteren Polyesterpolyole C) verwendet.

Mit verwendet werden können auch Polyetherpolyole D), die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Propylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5-und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose. Besonders bevorzugt sind die oben genannten diprimären Amine, beispielsweise Ethylendiamin.

Die Polyetherpolyole D), vorzugsweise Polyoxypropylenpolyole und/oder Polyoxyethylenpolyole, besitzen eine Funktionalität von vorzugsweise 2 bis 6 und insbesondere 2 bis 5 und zahlenmittlere Molekulargewichte von 150 bis 3000, vorzugsweise 200 bis 2000 und insbesondere 250 bis 1000.

In einer Ausführungsform der Erfindung wird ein alkoxyliertes Amin, bevorzugt ein propoxyliertes Amin, beispielsweise propoxyliertes Ethylendiamin, als Poyletherpolyol D) mitverwendet, im Allgemeinen in Mengen von 0 bis 35 Gew.-%, vorzugsweise in Mengen von 0 bis 10 Gew.-% bezogen auf die Summe der Komponenten B) bis H). In einer Ausführungsform wird ein propoxyliertes Amin in Mengen von 2 bis 6 Gew.-% mitverwendet. In einer besonders bevorzugten Ausführungsform wird kein alkoxyliertes Amin mitverwendet.

Ein Vorteil der Erfindung ist, dass die Mitverwendung eines Polyetherpolyols D), insbesondere eines propoxylierten Amins, auch entfallen kann.

In einer weiteren besonders bevorzugten Ausführungsform der Erfindung wird ein alkoxyliertes Polyol, bevorzugt ein propoxyliertes Polyol, auf Basis eines Gemischs aus Glycerin und Saccharose oder Diethylenglykol und Saccharose als Polyetherpolyol D) mitverwendet, vorzugsweise in Mengen von 0 bis 35 Gew.-%, bevorzugt 0 bis 20 Gew.-%, besonders bevorzugt 0 bis 10 Gew.-%, bezogen auf die Summe der Komponenten B) bis H).

Im Allgemeinen beträgt der Anteil der Polyetherpolyole D) 0 bis 40 Gew.-%, bevorzugt 0 bis 20 Gew.-%, besonders bevorzugt 0 bis 10 Gew.-%, bezogen auf die Summe der Komponenten B) bis F).

Als Flammschutzmittel E) können im Allgemeinen die aus dem Stand der Technik bekannten Flammschutzmittel verwendet werden. Geeignete Flammschutzmittel sind beispielsweise nicht einbaubare bromierte Substanzen, bromierte Ester, bromierte Ether (Ixol), oder bromierte Alkohole wie Dibromneopentylalkohol, Tribromneopentylalkohol und PHT-4-Diol sowie chlorierte Phosphate wie z.B. Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)ethylen-diphosphat, Dimethylmethanphosphonat, Diethanolaminomethylphosphonsäurediethylester sowie handelsübliche halogenhaltige Flammschutzpolyole. Als weitere flüssige Flammschutzmittel können Phosphate oder Phosphonate wie Diethylethanphosphonat (DEEP), Triethylphosphat (TEP), Dimethylpropylphosphonat (DMPP), Diphenylkresylphosphat (DPK) und andere eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyurethan-Hartschaumstoffe verwendet werden.

Bevorzugte Flammschutzmittel sind die genannten Phosphor enthaltenden Flammschutzmittel, besonders bevorzugt sind Dimethylpropylphosphonat (DMPP), Diethylethanphosphonat (DEEP), Triethylphosphat (TEP), Diphenylkresylphosphat (DPK), Triphenylphosphat (TPP) und Tris-(2-chlorpropyl)phosphat (TCPP), insbesondere bevorzugt ist TCPP.

Im Allgemeinen beträgt der Anteil des Flammschutzmittels E) 0 bis 30 Gew.-%, bevorzugt 0 bis 15 Gew.-%, besonders bevorzugt 0 bis 10 Gew.-%, insbesondere 0 bis 5 Gew.-%, speziell 0 Gew.-%, bezogen auf die Komponenten B) bis H).

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Daneben können physikalische Treibmittel wie niedrig siedende Kohlenwasserstoffe eingesetzt werden. Geeignet sind Flüssigkeiten, welche gegenüber den organischen, gegebenenfalls modifizierten Polyisocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise Verwendung finden Wasser, alle Pentanisomere, sowie Gemische aus Wasser und Pentanisomeren, sowie Ameisensäure.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser oder Ameisensäure ganz oder teilweise in der Polyolkomponente gelöst vor und werden das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig die Katalysatoren zugegeben. Die Hilfs- und Zusatzstoffe, wie auch die Flammschutzmittel sind - wenn vorhanden - bereits im Polyolblend enthalten.

Die eingesetzte Menge des Treibmittels bzw. der Treibmittelmischung liegt bei 1 bis 40 Gew.-%, vorzugsweise 1 bis 25 Gew.-%, besonders bevorzugt 1,5 bis 17,5 Gew.-%, jeweils bezogen auf die Summe der Komponenten B) bis H).

Dient Wasser als Treibmittel, so wird es vorzugsweise der Komponente B) in einer Menge von 0,2 bis 5 Gew.-%, bezogen auf die Komponente B), zugesetzt. Der Wasserzusatz kann in Kombination mit dem Einsatz der anderen beschriebenen Treibmittel erfolgen. Bevorzugt wird Wasser in Kombination mit Pentan eingesetzt.

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen enthaltenden Verbindungen der Komponente B) bis F) mit den organischen, gegebenenfalls modifizierten Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo(2,2,2)octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 6 Gew.-%, insbesondere 0,05 bis 3 Gew.-% Katalysator bzw. Katalysatorkombination, bezogen auf das Gewicht der Komponenten B) bis H). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-%, vorzugsweise 0,01 bis 5 Gew.-%, bezogen auf das Gewicht der Komponenten B) bis H), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung in Mengen von 0,5 bis 50 Gew.-%, vorzugsweise 1 bis 40 Gew.-%, bezogen auf das Gewicht der Komponenten A) bis H), zugegeben, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der erfindungsgemäßen Polyurethan-Hartschaumstoffe werden die gegebenenfalls modifizierten organischen Polyisocyanate A), die speziellen erfindungsgemäßen Polyetheresterpolyole B), gegebenenfalls die weiteren Polyesterpolyole C) und gegebenenfalls die Polyetherole und/oder weiteren Verbindungen mit mindestens zwei gegenüber Isocyanaten reaktiven Gruppen D) in solchen Mengen zur Umsetzung gebracht, dass das Äquivalenzverhältnis von NCO-Gruppen der Polyisocyanate A) zur Summe der reaktiven Wasserstoffatome der Komponenten B), gegebenenfalls C) gegebenenfalls D) sowie E) und F), 1 bis 6:1, vorzugsweise 1,1 bis 5:1 und insbesondere 1,2 bis 3,5:1 beträgt.

In einer bevorzugten Ausführungsform umfasst die Polyolkomponente
25 bis 90 Gew.-% der Polyetheresterpolyole B),
0 bis 20 Gew.-% der weiteren Polyesterpoylole C),
0 bis 35 Gew.-% der Polyetherpolyole D),
0 bis 30 Gew.-% Flammschutzmittel E),
1 bis 40 Gew.-% Treibmittel F),
0,01 bis 5 Gew.-% Katalysatoren G),
0,01 bis 10 Gew.-% Hilfsmittel und/oder Zusatzstoffe H).

Besonders bevorzugt umfasst die Polyolkomponente
50 bis 85 Gew.-% der Polyetheresterpolyole B),
0 bis 10 Gew.-%, insbesondere 0 Gew.-% der weiteren Polyesterpoylole C),
0 bis 10 Gew.-%, insbesondere 0 Gew.-% der Polyetherpolyole D),
0 bis 15 Gew.-% Flammschutzmittel E),
1 bis 30 Gew.-% Treibmittel F),
0,05 bis 3 Gew.-% Katalysatoren G),
0,01 bis5 Gew.-% Hilfsmittel und/oder Zusatzstoffe H).

Die Polyurethan-Hartschaumstoffe werden vorteilhafter Weise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90 °C, vorzugsweise von 20 bis 60 °c und insbesondere von 20 bis 35 °C gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110 °C, vorzugsweise 30 bis 70 °C und insbesondere 40 bis 60 °C.

Die nach dem erfindungsgemäßen Verfahren hergestellten Polyurethan-Hartschaumstoffe weisen eine Dichte von 15 bis 300 g/l, vorzugsweise von 20 bis 100 g/l und insbesondere von 25 bis 60 g/l auf.

### Beispiele

### Beispiel 1

### Herstellung eines Polyetheresterpolyols mit Ölsäure

250,1 g Glycerin, 2,5 g Imidazol, 1139,7 g Saccharose sowie 750,6 g Ölsäure wurden bei 25 °C in einen 5 L-Reaktor vorgelegt. Anschließend wurde dieser mit Stickstoff inertisiert. Der Kessel wurde auf 130 °C erhitzt und es wurden 2858,1 g Propylenoxid zudosiert. Nach einer Abreaktionszeit von 4 h wurde für 60 Minuten unter vollem Vakuum bei 100 °C evakuiert und anschließend auf 25 °C abgekühlt. Es wurden 4945 g Produkt erhalten.

Das erhaltene Polyetheresterpolyol besaß folgende Kennwerte:
OH-Zahl: 416,3 mg KOH/g
Viskosität (25 °C): 7210 mPas
Säurezahl: 0,08 mg KOH/g
Wassergehalt: 0,016%

### Beispiel 2

### Herstellung eines Polyetheresterpolyols mit Ölsäuremethylester

995,2 g Glycerin, 2,5 g Imidazol, 422,8 g Saccharose sowie 676,1 g Ölsäuremethylester wurden bei 25 °C in einen 5 L-Reaktor vorgelegt. Anschließend wurde dieser mit Stickstoff inertisiert. Der Kessel wurde auf 130 °C erhitzt und es wurden 2903,4 g Propylenoxid zudosiert. Nach einer Abreaktionszeit von 3 h wurde für 60 Minuten unter vollem Vakuum bei 100 °C evakuiert und anschließend auf 25 °C abgekühlt. Es wurden 4904,1 g Produkt erhalten.

Das erhaltene Polyetheresterpolyol besaß folgende Kennwerte:
OH-Zahl: 464,5 mg KOH/g
Viskosität (25 °C): 783 mPas
Säurezahl: 0,11 mg KOH/g
Wassergehalt: 0,02%

### Vergleichsbeispiel 1

### Aus

55,65 Gew.-Teilen eins Polyetheralkohols 1 mit einer Hydroxylzahl von 490 mg KOH/g, basierend auf Propylenoxid und Mischung aus Zucker und Glycerin als Starter,
6 Gew.-Teilen eins Polyetheralkohols 2 mit einer Hydroxylzahl von 750 mg KOH/g, basierend auf Propylenoxid und Ethylendiamin als Starter,
20 Gew.-Teilen Rizinusöl,
15 Gew.-Teilen Tris-2-chlorisopropylphosphat (TCPP),
2 Gew.-Teilen silikonhaltiger Schaumstabilisator (Tegostab® B 8443 der Firma Goldschmidt),
0,5 Gew.-Teilen einer 50 gew.-%igen Lösung von Kaliumacetat in Ethylenglykol, und 0,85 Gew.-Teilen Wasser
wurde durch Vermischen eine Polyolkomponente hergestellt.

Die Polyolkomponente ist bei 20 °C stabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 129 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Vergleichsbeispiel 2

Gegenüber der Polyolkomponente aus Vergleichsbeispiel 1 wurden die Einsatzmengen von Polyetheralkohol 1 und Wasser wie folgt geändert:
54,0 Gew.-Teile des Polyetheralkohols 1, und
2,5 Gew.-Teile Wasser.

Durch Vermischen wurde eine Polyolkomponente hergestellt. Die Polyolkomponente war bei T = 20 °C nicht stabil und separierte in zwei Phasen.

### Vergleichsbeispiel 3

Gegenüber der Polyolkomponente aus Vergleichsbeispiel 1 wurden die Einsatzmengen von Polyetheralkohol 1 und Tris-2-chlorisopropylphosphat wie folgt geändert:
60,65 Gew.-Teile des Polyetheralkohols 1, und
10 Gew.-Teile Tris-2-chlorisopropylphosphat.

Durch Vermischen wurde eine Polyolkomponente hergestellt. Die Polyolkomponente war bei T = 20 °C nicht stabil und separierte in zwei Phasen.

### Vergleichsbeispiel 4

An der Polyolkomponente aus Vergleichsbeispiel 1 wurden die Einsatzmengen von Polyetheralkohol 1 und Polyetheralkohol 2 wie folgt geändert:
60,65 Gew.-Teile des Polyetheralkohols 1, und
0 Gew.-Teile des Polyetheralkohols 2.

Durch Vermischen wurde eine Polyolkomponente hergestellt. Die Polyolkomponente war bei T = 20 °C nicht stabil und separierte in zwei Phasen.

### Vergleichsbeispiel 5

### Aus

56,15 Gew.-Teilen eines Polyetheralkohols1,
6 Gew.-Teilen des Polyetheralkohols 2,
20 Gew.-Teilen eines Polyetheralkohols 3 mit einer Hydroxylzahl von 400 mg KOH/g basierend auf Propylenoxid und Glycerin als Starter,
15 Gew.-Teilen Tris-2-chlorisopropylphosphat,
1,8 Gew.-Teilen silikonhaltiger Schaumstabilisator (Tegostab® B 8443 der Firma Goldschmidt),
0,2 Gew.-Teilen Kaliumacetat in Ethylenglykol 50 %ige Lösung und
0,85 Gew.-Teilen Wasser
wurde durch Vermischen eine Polyolkomponente hergestellt.

Die Polyolkomponente war bei 20 °C stabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Vergleichsbeispiel 6

Gegenüber der Polyolkomponente aus Vergleichsbeispiel 5 wurden die Einsatzmengen von Polyetheralkohol 1 und Wasser wie folgt geändert:
54,5 Gew.-Teile des Polyetheralkohols 1 und
2,5 Gew.-Teile Wasser.

Durch Vermischen wurde eine Polyolkomponente hergestellt. Die Polyolkomponete ist bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Vergleichsbeispiel 7

Gegenüber der Polyolkomponente aus Vergleichsbeispiel 5 wurden die Einsatzmengen der Rohstoffe Polyetheralkohol 1 und Tris-2-chlorisopropylphosphat wie folgt geändert:
61,15 Gew.-Teile des Polyetheralkohols 1 und
10 Gew.-Teile Tris-2-chlorisopropylphosphat.

Durch Vermischen wurde eine Polyolkomponente hergestellt. Die Polyolkomponente war bei T = 20 °C trüb. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser, bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Vergleichsbeispiel 8

Gegenüber der Polyolkomponente aus Vergleichsbeispiel 1 wurden die Einsatzmengen von Polyetheralkohol 1 und Polyetheralkohol 2 wie folgt geändert:
60,65 Gew.-Teile des Polyetheralkohols 1 und
0 Gew.-Teile des Polyetheralkohols 2.

Durch Vermischen wurde eine Polyolkomponente hergestellt. Die Polyolkomponente ist bei T = 20 °C nicht stabil und separiert in zwei Phasen.

### Beispiel 3

### Aus

75,65 Gew.-Teilen des Polyetheresterpolyols 1 aus Beispiel 1 mit einer Hydroxylzahl von 416 mg KOH/g, basierend auf Propylenoxid und einer Mischung aus Zucker, Glycerin und Ölsäure als Starter,
6 Gew.-Teilen des Polyetheralkohols 2,
15 Gew.-Teilen Tris-2-chlorisopropylphosphat,
2,0 Gew.-Teilen silikonhaltigem Schaumstabilisator (Tegostab® B 8443 der Firma Goldschmidt),
0,5 Gew.-Teilen Kaliumacetat in Ethylenglykol 50 %ige Lösung, und
0,85 Gew.-Teilen Wasser
wurde durch Vermischen eine Polyolkomponente hergestellt.

Die Polyolkomponente war bei 20 °C stabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 4

Gegenüber der Polyolkomponente aus Beispiel 3 wurden die Einsatzmengen von Polyetheresterpolyol 1 und Wasser wie folgt geändert:
74,0 Gew.-Teile des Polyetheresterpolyols 1 und
2,5 Gew.-Teile Wasser.

Durch Vermischen wurde eine Polyolkomponente hergestellt. Die Polyolkomponete war bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 5

Gegenüber der Polyolkomponente aus Beispiel 3 wurden die Einsatzmengen von Polyetheresterpolyol 1 und Tris-2-chlorisopropylphosphat wie folgt geändert:
80,65 Gew.-Teile des Polyetheresterpolyols 1 und
10 Gew.-Teile Tris-2-chlorisopropylphosphat.

Durch Vermischen wurde eine Polyolkomponente hergestellt. Die Polyolkomponete war bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 6

Gegenüber der Polyolkomponente aus Beispiel 3 wurden die Einsatzmengen von Polyetheresterpolyol 1 und Polyetheralkohol 2 wie folgt geändert:
81,65 Gew.-Teile des Polyetheresterpolyols 1 und
0 Gew.-Teile des Polyetheralkohols 2.

Durch Vermischen wurde eine Polyolkomponente hergestellt. Die Polyolkomponete war bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 7

### Aus

75,65 Gew.-Teilen des Polyetheresterpolyols 2 aus Beispiel 2 mit einer Hydroxylzahl von 465 mg KOH/g, basierend auf Propylenoxid und einer Mischung aus Zucker, Glycerin und Ölsäure als Starter,
6 Gew.-Teilen des Polyetheralkohols 2,
15 Gew.-Teilen Tris-2-chlorisopropylphosphat,
2,0 Gew.-Teilen silikonhaltigem Schaumstabilisator (Tegostab® B 8443 der Firma Goldschmidt),
0,5 Gew.-Teilen Kaliumacetat in Ethylenglykol 50%ige Lösung, und
0,85 Gew.-Teilen Wasser
wurde durch Vermischen eine Polyolkomponente hergestellt.

Die Polyolkomponente war bei 20 °C stabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 8

Gegenüber der Polyolkomponente aus Beispiel 7 wurden die Einsatzmengen von Polyetheresterpolyol 2 und Wasser wie folgt geändert:
74,0 Gew.-Teile des Polyetheresterpolyols 2 und
2,5 Gew.-Teile Wasser.

Durch Vermischen wurde eine Polyolkomponente hergestellt. Die Polyolkomponente war bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 9

Gegenüber der Polyolkomponente aus Beispiel 7 wurden die Einsatzmengen von Polyetheresterpolyol 2 und Tris-2-chlorisopropylphosphat wie folgt geändert:
80,65 Gew.-Teile des Polyetheresterpolyols 2 und
10 Gew.-Teile Tris-2-chlorisopropylphosphat.

Durch Vermischen wurde eine Polyolkomponente hergestellt. Die Polyolkomponente war bei T = 20 °C klar. Diese wurde mit einem Polymer-MDI mit einem NCO-Gehalt von 30,9 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Beispiel 10

Gegenüber der Polyolkomponente aus Beispiel 7 wurden die Einsatzmengen von Polyetheresterpolyol 2 und Polyetheralkohol 2 wie folgt geändert:
81,65 Gew.-Teile des Polyetheresterpolyols 2 und
0 Gew.-Teile des Polyetheralkohols 2.

Durch Vermischen wurde eine Polyolkomponente hergestellt. Die Polyolkomponente war bei T = 20 °C klar. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 116 umgesetzt. Die Mengen an Dimethylcyclohexylamin und Wasser wurden so ausgewählt, dass die Abbindezeit 53 Sekunden betrug und der resultierende Schaum eine Dichte von 38 kg/m³ aufwies.

### Härtung

Die Härtung wurde mit dem Bolzentest ermittelt. Dazu wird 2,5; 3; 4; 5; 6 und 7 Minuten nach Vermischung der Komponenten in einem Polystyrolbecher ein Stahlbolzen mit einer Kugelkalotte von 10 mm Radius mit einer Zug/Druckprüfmaschine 10 mm tief in den entstandenen Schaumpilz eingedrückt. Die erforderliche Maximalkraft in N ist ein Maß für die Härtung des Schaumstoffs. Angegeben ist der Mittelwert der Maximalkräfte nach 3,4 und 5 Minuten.

### Pentanlöslichkeit

Die Pentanlöslichkeit wurde bestimmt, indem schrittweise Pentan in die zu messende Komponente gegeben wurde. In exakt 100 g der zu untersuchenden Komponente wurden je nach erwartender Pentanlöslichkeit Pentan zugegeben und vermischt. War das Gemisch weder trüb noch zweiphasig, so musste weiteres Pentan hinzugegeben und erneut vermischt werden.

War das Gemisch zweiphasig, ließ man das Glas bei Raumtemperatur offen stehen, bis das überschüssige Pentan verdampft und die verbleibende Lösung klar war, und wog dann die gelöste Menge Pentan zurück.

Bei einer Trübung wurde das Glas verschlossen und bei Raumtemperatur so lange stehen gelassen, bis sich zwei Phasen gebildet hatten. Danach erfolgte das Abdampfen und Zurückwiegen.

Die Ergebnisse der Versuche sind in den Tabellen 1 bis 4 zusammengefasst.

**Tabelle 1: Vergleichsbeispiele 1 bis 4**

| | Vergleichsbeispiel 1 | Vergleichsbeispiel 2 | Vergleichsbeispiel 3 | Vergleichsbeispiel 4 |
|---|---|---|---|---|
| Polyether 1 | 55,65 | 54 | 60,65 | 61,65 |
| Polyether 2 | 6 | 6 | 6 | |
| TCPP | 15 | 15 | 10 | 15 |
| Silikonhaltiger Schaumstabilisator | 2 | 2 | 2 | 2 |
| Ricinusöl | 20 | 20 | 20 | 20 |
| 50 gew.-%ige Lösung von Kaliumacetat in Ethylenglykol | 0,5 | 0,5 | 0,5 | 0,5 |
| Wasser | 0,85 | 2,5 | 0,85 | 0,85 |
| Phasenstabilität | Klar | Phasentrennung | Phasentrennung | Phasentrennung |
| Abbindezeit [s] | 53 | | | |
| Rohdichte [kg/m³] | 38 | | | |
| Mittelwert der Härtung aus 3, 4, 5 min [N] | 81,1 | | | |
| Viskosität [mPas] | 3300 | | | |
| Pentanlöslichkeit [%] | 7 | | | |

**Tabelle 2: Vergleichsbeispiele 5 bis 8**

| | Vergleichs beispiel 5 | Vergleichsbeispiel 6 | Vergleichsbeispiel. 7 | Vergleichsbeispiel 8 |
|---|---|---|---|---|
| Polyether 1 | 56,15 | 54,5 | 61,15 | 62,15 |
| Polyether 2 | 6 | 6 | 6 | |
| TCPP | 15 | 15 | 10 | 15 |
| Silikonhaltiger Schaumstabilisator | 1,8 | 1,8 | 1,8 | 1,8 |
| Polyether3 | 20 | 20 | 20 | 20 |
| 50 gew.-%ige Lösung von Kaliumacetat in Ethylenglykol | 0,2 | 0,2 | 0,2 | 0,2 |
| Wasser | 0,85 | 2,5 | 0,85 | 0,85 |
| Phasenstabilität | Trüb | Klar | Trüb | Phasentrennung |
| Abbindezeit [s] | 53 | 53 | | |
| Rohdichte [kg/m³] | 38 | 38 | | |
| Mittelwert der Härtung aus 3, 4, 5 min [N] | 77,3 | 74,2 | | |
| Viskosität [mPas] | 3000 | 2260 | 3850 | |
| Pentanlöslichkeit [%] | 4,5 | 4,5 | 4,2 | |

**Tabelle 3: Erfindungsgemäße Beispiele 3 bis 6**

| | Beispiel 3 | Beispiel 4 | Beispiel 5 | Beispiel 6 |
|---|---|---|---|---|
| Polyetheresterpolyol 1 | 75,65 | 74,0 | 80,65 | 81,65 |
| Polyether 2 | 6 | 6 | 6 | |
| TCPP | 15 | 15 | 10 | 15 |
| Silikonhaltiger Schaumstabilisator | 2 | 2 | 2 | 2 |
| 50 gew.-%ige Lösung von Kaliumacetat in Ethylenglykol | 0,5 | 0,5 | 0,5 | 0,5 |
| Wasser | 0,85 | 2,5 | 0,85 | 0,85 |
| Phasenstabilität | Klar | Klar | Klar | Klar |
| Abbindezeit [s] | 53 | 53 | 53 | 54 |
| Rohdichte [kg/m³] | 38 | 38 | 38 | 38,2 |
| Mittelwert der Härtung aus 3, 4, 5 min [N] | 90,9 | 91,4 | 92,9 | 88,3 |
| Viskosität [mPas] | 4640 | 3950 | 4950 | 4200 |
| Pentanlöslichkeit | 20,1 | 18,5 | 19,1 | 19,0 |

### Polyetheresterpolyol 1 aus

| | |
|---|---|
| Zucker | 22,8 Gew.-% |
| Glycerin | 5,0 Gew.-% |
| Ölsäure | 15,0 Gew.-% |
| PO | 57,2 Gew.-% |

| | | |
|---|---|---|
| Hydroxylwert: | 416 mgKOH/g | (DIN 53240) |
| Viskosität (T = 25 °C): | 7210 mPas | (DIN 53018) |

**Tabelle 4: Erfindungsgemäße Beispiele 7 bis 10**

| | Beispiel 7 | Beispiel 8 | Beispiel 9 | Beispiel 10 |
|---|---|---|---|---|
| Polyetheresterpolyol 2 | 75,7 | 74,0 | 80,65 | 81,65 |
| Polyether 2 | 6 | 6 | 6 | |
| TCPP | 15 | 15 | 10 | 15 |
| Silikonhaltiger Schaumstabilisator | 2 | 2 | 2 | 2 |
| 50 gew.-%ige Lösung von Kaliumacetat in Ethylenglykol | 0,5 | 0,5 | 0,5 | 0,5 |
| Wasser | 0,85 | 2,5 | 0,85 | 0,85 |
| Phasenstabilität | Klar | Klar | Klar | Klar |
| Abbindezeit [s] | 53 | 53 | 53 | 54 |
| Rohdichte [kg/m³] | 38 | 38 | 38 | 38,2 |
| Mittelwert der Härtung aus 3, 4, 5min [N] | 82,5 | 80,7 | 84,1 | 77,3 |
| Viskosität [mPas] | 950 | 640 | 1080 | 860 |
| Pentanlöslichkeit | 16,3 | 15,6 | 16,1 | 15 |

### Polyetheresterpolyol 2 aus

| | |
|---|---|
| Zucker | 8,46 Gew.-% |
| Glycerin | 19,9 Gew.-% |
| Ölsäuremethylester | 13,5 Gew.-% |

| | | |
|---|---|---|
| PO | 58,07 Gew.-% | |
| Hydroxylwert: | 464,5 mgKOH/g | (DIN 53240) |
| Viskosität (T = 25 °C): | 783 mPas | (DIN 53018) |

Die Ergebnisse der Vergleichsbeispiele in den Tabellen 1 und 2 zeigen, dass die beschriebene Standardsysteme kritisch gegenüber Mischungslücken sind. Bereits kleinere Änderungen der Zusammensetzung führen zur Phasentrennung (Vergleichsbeispiele 2, 3, 4 und 8). Die erfindungsgemäßen Beispiele 1 bis 8 sind bei entsprechenden Änderungen der Zusammensetzung der Polyolkomponenten alle phasenstabil.

Zudem weisen sämtliche erfindungsgemäßen Beispiele sehr gute Pentanlöslichkeiten auf (alle > 15 %), die deutlich über den Pentanlöslichkeiten der Vergleichsbeispiele liegen (4,2 bis 7 %). Eine hohe Pentanlöslichkeit ist für viele Anwendungen relevant.

Außerdem führen die eingesetzten Polyetherester in den Beispielen 3 bis 6, 7 und 9 zu einer verbesserten Aushärtung. Weiterhin erhält man bei Einsatz des Polyetheresterpolyols 2 (Beispiele 7 bis 10) geringere Viskositäten, was für die Verarbeitung auf bestimmten Verarbeitungsmaschinen vorteilhaft ist.

## Patentansprüche

1. Polyurethan-Hartschaumstoffe, erhältlich durch Umsetzung von
A) organischen oder modifizierten organischen Polyisocyanaten oder Gemischen daraus,
B) Verbindungen mit mindestens zwei mit Isocyanatgruppen reaktiven Wasserstoffatomen in Anwesenheit von
C) gegebenenfalls weiteren Polyesterpolyolen,
D) gegebenenfalls Polyetherolpolyolen,
E) gegebenenfalls Flammschutzmitteln,
F) einem oder mehreren Treibmitteln,
G) Katalysatoren, und
H) gegebenenfalls weiteren Hilfsmitteln und/oder Zusatzstoffen,
**dadurch gekennzeichnet, dass** Komponente B) das Umsetzungsprodukt von
a1) 15 bis 40 Gew.-% eines oder mehrerer Polyole oder Polyamine mit einer mittleren Funktionalität von 2,5 bis 8,
a2) 2 bis 30 Gew.-% einer oder mehrerer Fettsäuren und/oder Fettsäuremonoester,
a3) 35 bis 70 Gew.-% Propylenoxid,
enthält.

2. Polyurethan-Hartschaumstoffe nach Anspruch 1, **dadurch gekennzeichnet, dass** die Polyole oder Polyamine der Komponente a1) ausgewählt sind aus der Gruppe bestehend aus Zuckern, Pentaerythrit, Sorbit, Trimethylolpropan, Glycerin, Toluylendiamin, Ethylendiamin, Ethylenglykol, Propylenglykol und Wasser.

3. Polyurethan-Hartschaumstoffe nach Anspruch 2, **dadurch gekennzeichnet, dass** die Komponente a1) ein Gemisch aus Glycerin und Saccharose enthält.

4. Polyurethan-Hartschaumstoffe nach Anspruch 2 oder 3, **dadurch gekennzeichnet, dass** die Komponente a2) Ölsäure oder ein Ölsäurederivat enthält.

5. Polyurethan-Hartschaumstoffe nach einem der Ansprüche 1 bis 4, **dadurch gekennzeichnet, dass** die Komponente B) eine OH-Zahl von 200 bis 700 mg KOH/g aufweist.

6. Polyurethan-Hartschaumstoffe nach einem der Ansprüche 1 bis 5, **dadurch gekennzeichnet, dass** die Komponente B) eine Funktionalität von 2,5 bis 8 aufweist.

7. Polyurethan-Hartschaumstoffe nach einem der Ansprüche 1 bis 6, **dadurch gekennzeichnet, dass** die Komponente D) ein propoxyliertes Ethylendiamin ist.

8. Polyurethan-Hartschaumstoff nach einem der Ansprüche 1 bis 6, **dadurch gekennzeichnet, dass** die Komponente D) ein propoxyliertes Polyol auf Basis eines Gemischs aus Glycerin und Saccharose ist.

9. Verfahren zur Herstellung von Polyurethan-Hartschaumstoffen durch Umsetzung von
A) organischen oder modifizierten organischen Polyisocyanaten oder Gemischen daraus,
B) einem oder mehreren Polyetheresterpolyolen,
C) gegebenenfalls weiteren Polyesterpolyolen,
D) gegebenenfalls Polyetherolpolyolen,
E) gegebenenfalls Flammschutzmitteln,
F) einem oder mehreren Treibmitteln,
G) Katalysatoren, und
H) gegebenenfalls weiteren Hilfsmitteln und/oder Zusatzstoffen
**dadurch gekennzeichnet, dass** Komponente B) das Umsetzungsprodukt von
a1) 15 bis 40 Gew.-% eines oder mehrerer Polyole oder Polyamine mit einer mittleren Funktionalität von 2,5 bis 8,
a2) 2 bis 30 Gew.-% einer oder mehrerer Fettsäuren und/oder Fettsäuremonoester,
a3) 35 bis 70 Gew.-% Propylenoxid ,
enthält.

10. Polyolmischung enthaltend als Komponenten
B) ein oder mehrere Polyetheresterpolyole,
C) gegebenenfalls weitere Polyesterpolyole,
D) gegebenenfalls Polyetherolpolyole,
E) gegebenenfalls Flammschutzmittel, und
F) ein oder mehrere Treibmittel,
G) Katalysatoren, und
H) gegebenenfalls weitere Hilfsmittel und/oder Zusatzstoffe,
**dadurch gekennzeichnet, dass** Komponente B) das Umsetzungsprodukt von
a1) 15 bis 40 Gew.-% eines oder mehrerer Polyole oder Polyamine mit einer mittleren Funktionalität von 2,5 bis 8,
a2) 2 bis 30 Gew.-% einer oder mehrerer Fettsäuren und/oder Fettsäuremonoester,
a3) 35 bis 70 Gew.-% Propylenoxid,
enthält.

11. Polyolmischung nach Anspruch 10 enthaltend
25 bis 90 Gew.-% der Polyetheresterpolyole B),
0 bis 20 Gew.-% der weiteren Polyesterpoylole C),
0 bis 35 Gew.-% der Polyetherpolyole D),
0 bis 30 Gew.-% Flammschutzmittel E), und
1 bis 40 Gew.-% Treibmittel F),
0,001 bis 5 Gew.-% Katalysatoren G),
0,01 bis 10 Gew.-% der weiteren Hilfsmitteln und/oder Zusatzstoffe H).

## Claims

1. A rigid polyurethane foam obtainable by reaction of
A) organic or modified organic polyisocyanates or mixtures thereof,
B) compounds having two or more isocyanate-reactive hydrogen atoms in the presence of
C) optionally further polyester polyols,
D) optionally polyetherol polyols,
E) optionally flame retardants,
F) one or more blowing agents,
G) catalysts, and
H) optionally further auxiliaries and/or additives,
wherein component B) comprises the reaction product of
a1) 15 to 40 wt% of one or more polyols or polyamines having an average functionality of 2.5 to 8,
a2) 2 to 30 wt% of one or more fatty acids and/or fatty acid monoesters,
a3) 35 to 70 wt% of propylene oxide.

2. The rigid polyurethane foam according to claim 1 wherein the polyols or polyamines of component a1) are selected from the group consisting of sugars, pentaerythritol, sorbitol, trimethylolpropane, glycerol, tolylenediamine, ethylenediamine, ethylene glycol, propylene glycol and water.

3. The rigid polyurethane foam according to claim 2 wherein said component a1) comprises a mixture of glycerol and sucrose.

4. The rigid polyurethane foam according to claim 2 or 3 wherein said component a2) comprises oleic acid or an oleic acid derivative.

5. The rigid polyurethane foam according to any of claims 1 to 4 wherein said component B) has an OH number of 200 to 700 mg KOH/g.

6. The rigid polyurethane foam according to any of claims 1 to 5 wherein said component B) has a functionality of 2.5 to 8.

7. The rigid polyurethane foam according to any of claims 1 to 6 wherein said component D) is a propoxylated ethylenediamine.

8. The rigid polyurethane foam according to any of claims 1 to 6 wherein said component D) is a propoxylated polyol based on a mixture of glycerol and sucrose.

9. The process for producing rigid polyurethane foams by reaction of
A) organic or modified organic polyisocyanates or mixtures thereof,
B) one or more polyetherester polyols,
C) optionally further polyester polyols,
D) optionally polyetherol polyols,
E) optionally flame retardants,
F) one or more blowing agents,
G) catalysts, and
H) optionally further auxiliaries and/or additives, wherein component B) comprises the reaction product of
a1) 15 to 40 wt% of one or more polyols or polyamines having an average functionality of 2.5 to 8,
a2) 2 to 30 wt% of one or more fatty acids and/or fatty acid monoesters,
a3) 35 to 70 wt% of propylene oxide.

10. A polyol mixture comprising as components
B) one or more polyetherester polyols,
C) optionally further polyester polyols,
D) optionally polyetherol polyols,
E) optionally flame retardants,
F) one or more blowing agents,
G) catalysts, and
H) optionally further auxiliaries and/or additives,
wherein component B) comprises the reaction product of
a1) 15 to 40 wt% of one or more polyols or polyamines having an average functionality of 2.5 to 8,
a2) 2 to 30 wt% of one or more fatty acids and/or fatty acid monoesters,
a3) 35 to 70 wt% of propylene oxide.

11. The polyol mixture according to claim 10 comprising
25 to 90 wt% of polyetherester polyols B),
0 to 20 wt% of further polyester polyols C),
0 to 35 wt% of polyether polyols D),
0 to 30 wt% of flame retardants E), and
1 to 40 wt% of blowing agents F),
0.001 to 5 wt% of catalysts G),
0.01 to 10 wt% of the further auxiliaries and/or additives H).

## Revendications

1. Mousses dures de polyuréthane, pouvant être obtenues par mise en réaction de :
A) des polyisocyanates organiques ou organiques modifiés ou des mélanges de ceux-ci,
B) des composés contenant au moins deux atomes d'hydrogène réactifs avec les groupes isocyanate, en présence de
C) éventuellement des polyester-polyols supplémentaires,
D) éventuellement des polyéthérol-polyols,
E) éventuellement des agents ignifuges,
F) un ou plusieurs agents gonflants,
G) des catalyseurs, et
H) éventuellement des adjuvants et/ou additifs supplémentaires,
**caractérisé en ce que** le composant B) contient le produit de réaction de :
a1) 15 à 40 % en poids d'un ou de plusieurs polyols ou d'une ou de plusieurs polyamines ayant une fonctionnalité moyenne de 2,5 à 8,
a2) 2 à 30 % en poids d'un ou de plusieurs acides gras et/ou monoesters d'acides gras,
a3) 35 à 70 % en poids d'oxyde de propylène.

2. Mousses dures de polyuréthane selon la revendication 1, **caractérisées en ce que** les polyols ou les polyamines du composant a1) sont choisis dans le groupe constitué par les sucres, la pentaérythrite, le sorbitol, le triméthylolpropane, la glycérine, la toluylène-diamine, l'éthylène-diamine, l'éthylène glycol, le propylène glycol et l'eau.

3. Mousses dures de polyuréthane selon la revendication 2, **caractérisées en ce que** le composant a1) contient un mélange de glycérine et de saccharose.

4. Mousses dures de polyuréthane selon la revendication 2 ou 3, **caractérisées en ce que** le composant a2) contient de l'acide oléique ou un dérivé d'acide oléique.

5. Mousses dures de polyuréthane selon l'une quelconque des revendications 1 à 4, **caractérisées en ce que** le composant B) présente un indice OH de 200 à 700 mg KOH/g.

6. Mousses dures de polyuréthane selon l'une quelconque des revendications 1 à 5, **caractérisées en ce que** le composant B) présente une fonctionnalité de 2,5 à 8.

7. Mousses dures de polyuréthane selon l'une quelconque des revendications 1 à 6, **caractérisées en ce que** le composant D) est une éthylène-diamine propoxylée.

8. Mousses dures de polyuréthane selon l'une quelconque des revendications 1 à 6, **caractérisées en ce que** le composant D) est un polyol propoxylé à base d'un mélange de glycérine et de saccharose.

9. Procédé de fabrication de mousses dures de polyuréthane par mise en réaction de :
A) des polyisocyanates organiques ou organiques modifiés ou des mélanges de ceux-ci,
B) un ou plusieurs polyéther-ester-polyols,
C) éventuellement des polyester-polyols supplémentaires,
D) éventuellement des polyéthérol-polyols,
E) éventuellement des agents ignifuges,
F) un ou plusieurs agents gonflants,
G) des catalyseurs, et
H) éventuellement des adjuvants et/ou additifs supplémentaires,
**caractérisé en ce que** le composant B) contient le produit de réaction de :
a1) 15 à 40 % en poids d'un ou de plusieurs polyols ou d'une ou de plusieurs polyamines ayant une fonctionnalité moyenne de 2,5 à 8,
a2) 2 à 30 % en poids d'un ou de plusieurs acides gras et/ou monoesters d'acides gras,
a3) 35 à 70 % en poids d'oxyde de propylène.

10. Mélange de polyols contenant en tant que composants :
B) un ou plusieurs polyéther-ester-polyols,
C) éventuellement des polyester-polyols supplémentaires,
D) éventuellement des polyéthérol-polyols,
E) éventuellement des agents ignifuges et
F) un ou plusieurs agents gonflants,
G) des catalyseurs, et
H) éventuellement des adjuvants et/ou additifs supplémentaires,
**caractérisé en ce que** le composant B) contient le produit de réaction de :
a1) 15 à 40 % en poids d'un ou de plusieurs polyols ou d'une ou de plusieurs polyamines ayant une fonctionnalité moyenne de 2,5 à 8,
a2) 2 à 30 % en poids d'un ou de plusieurs acides gras et/ou monoesters d'acides gras,
a3) 35 à 70 % en poids d'oxyde de propylène.

11. Mélange de polyols selon la revendication 10, contenant :
25 à 90 % en poids des polyéther-ester-polyols B),
0 à 20 % en poids des polyester-polyols supplémentaires C),
0 à 35 % en poids des polyéther-polyols D),
0 à 30 % en poids des agents ignifuges E) et
1 à 40 % en poids des agents gonflants F),
0,001 à 5 % en poids des catalyseurs G),
0,01 à 10 % en poids des adjuvants et/ou additifs supplémentaires H).
